(19) Europäisches Patentamt
European Patent Office
Office européen des brevets

(11) **EP 3 975 288 B1**

(12) **EUROPEAN PATENT SPECIFICATION**

(45) Date of publication and mention
of the grant of the patent:
**03.04.2024 Bulletin 2024/14**

(21) Application number: **20814690.2**

(22) Date of filing: **25.05.2020**

(51) International Patent Classification (IPC):
*H01M 10/06* (2006.01)     *H01M 4/14* (2006.01)
*H01M 4/62* (2006.01)     *H01M 4/56* (2006.01)
*H01M 4/57* (2006.01)     *H01M 10/08* (2006.01)
*H01M 4/68* (2006.01)     *H01M 10/12* (2006.01)
*H01M 10/42* (2006.01)     *H01M 4/02* (2006.01)

(52) Cooperative Patent Classification (CPC):
**H01M 4/14; H01M 4/56; H01M 4/57; H01M 4/62;
H01M 4/622; H01M 4/627; H01M 4/628;
H01M 4/68; H01M 4/685; H01M 10/06;
H01M 10/08; H01M 10/12; H01M 10/4235;**
H01M 2004/027; H01M 2004/028;     (Cont.)

(86) International application number:
**PCT/JP2020/020487**

(87) International publication number:
**WO 2020/241547 (03.12.2020 Gazette 2020/49)**

(54) **LEAD STORAGE BATTERY**

BLEIAKKUMULATOR

BATTERIE AU PLOMB

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2019  JP 2019103302**

(43) Date of publication of application:
**30.03.2022  Bulletin 2022/13**

(73) Proprietor: **GS Yuasa International Ltd.
Kyoto-shi, Kyoto 601-8520 (JP)**

(72) Inventors:
• **OBAYASHI, Chihiro**
  **Kyoto-shi, Kyoto 601-8520 (JP)**
• **KAGOHASHI, Hiroki**
  **Kyoto-shi, Kyoto 601-8520 (JP)**
• **HAMANO, Yasuyuki**
  **Kyoto-shi, Kyoto 601-8520 (JP)**

(74) Representative: **Isarpatent
Patent- und Rechtsanwälte Barth
Charles Hassa Peckmann & Partner mbB
Friedrichstrasse 31
80801 München (DE)**

(56) References cited:
WO-A1-2016/147240     CN-A- 101 937 996
CN-A- 108 630 937     JP-A- S5 147 237
JP-A- S60 182 662     JP-A- S60 182 662
US-A1- 2004 053 130     US-A1- 2016 248 080
US-A1- 2017 309 897

(52) Cooperative Patent Classification (CPC): (Cont.)
Y02E 60/10; Y02P 70/50

**Description**

TECHNICAL FIELD

The present invention relates to a lead-acid battery.

BACKGROUND ART

Lead-acid batteries are in use for various applications, including automotive and industrial applications. The lead-acid batteries include a negative electrode plate, a positive electrode plate, a separator (or mat), an electrolyte solution, and the like. An additive may be added to constituent members of the lead-acid battery from the viewpoint of imparting various functions.

Patent Document 1 proposes a lead-acid battery in which a copolymer of propylene oxide and ethylene oxide was added to a negative electrode plate active material in combination with lignin sulfonate.

Patent Document 2 proposes a lead-acid battery in which an activator containing an organic polymer is enclosed in a small sealed case having a cleavage mechanism into a container, and the small sealed case is attached to the container or a lid part.

Patent Document 3 proposes a fiber-attached mat containing a plurality of fibers coated with a size composition, a binder composition, and one or more additives, in which the additives include one or more of rubber additives, rubber derivatives, aldehydes, metal salts, ethylene-propylene oxide block copolymers, sulfuric acid esters, sulfonic acid esters, phosphoric acid esters, polyacrylic acid, polyvinyl alcohol, lignin, phenol formaldehyde resins, cellulose, wood flour, and the like, and the additives can function to reduce moisture loss in a lead-acid battery.

On the other hand, as shown in Patent Document 4, a lead active material layer may contain, in addition to a lead-containing material, a reinforcing material such as polyester fibers, a surfactant such as lignin, barium sulfate, and the like, and additives selected from oxides, hydroxides, or sulfates of antimony, zinc, cadmium, silver, and bismuth are also used.

CN 108 630 937 A discloses a negative lead paste for a lead carbon battery and a negative plate.

CN 101 937 996 A describes a colloid lead-acid storage battery cathode lead plaster for an electric power assisted vehicle and a preparation method thereof.

JP S60 182662 A relates to lead-acid battery wherein a water-soluble block copolymer of propylene oxide and ethylene oxide is added in a negative plate as an expander in addition to lignin sulfonate instead of conventional lignin.

US 2017/0309897 provides a lead-acid battery including a negative electrode plate and a positive electrode plate. The electrode plate includes a negative electrode material containing graphite or carbon fiber, and the positive electrode plate includes a positive electrode material containing antimony.

US 2016/0248080 A1 discloses a liquid lead-acid battery wherein a volume Ve of an electrode group is calculated by a specific formula considering the electrode plate area of a negative and a positive electrode and the internal dimension of a container in the direction in which the electrode plates of the electrode group are laminated.

US 2004/0053130 A1 describes a negative active material characterized by being prepared by adding a lignin having a unit structure presented by a specific formula I as the main structure to a lead oxide.

JP S51 47237 A relates to a lead storage battery in which the cathode plate is improved.

PRIOR ART DOCUMENTS

PATENT DOCUMENTS

    Patent Document 1: JP-A-60-182662
    Patent Document 2: JP-A-2000-149980
    Patent Document 3: JP-W-2017-525092
    Patent Document 4: JP-A-2016-54091

SUMMARY OF THE INVENTION

PROBLEMS TO BE SOLVED BY THE INVENTION

A lead-acid battery is required to have a long life. Factors that shorten the life of the lead-acid battery include, for example, softening of a positive electrode material, reduction of moisture in an electrolyte solution (hereinafter may be simply referred to as a liquid decrease), and the like.

MEANS FOR SOLVING THE PROBLEMS

The present invention relates to a lead-acid battery comprising a positive electrode plate, a negative electrode plate, and an electrolyte solution, wherein the positive electrode plate comprises a positive current collector and a positive electrode material, the positive electrode material contains antimony in a content of less than 0.5% by mass, the negative electrode plate comprises a negative electrode material, the negative electrode material contains a polymer compound having a repeating structure of oxy $C_{2-4}$ alkylene units, and a content of the polymer compound in the negative electrode material is less than 500 ppm on a mass basis.

ADVANTAGES OF THE INVENTION

A cycle life in a case where charge and discharge of the lead-acid battery are repeated (for example, a shallow cycle) is improved.

BRIEF DESCRIPTION OF THE DRAWINGS

Fig. 1 is a partially cutaway exploded perspective view showing an appearance and an internal structure of a lead-acid battery according to the present invention.
Fig. 2 is a graph showing a relationship between a content of a polymer compound in a negative electrode material and an Sb precipitation amount in a negative electrode.
Fig. 3 is a graph showing a relationship between a number average molecular weight of the polymer compound in the negative electrode material and the Sb precipitation amount in the negative electrode.

MODE FOR CARRYING OUT THE INVENTION

[Lead-acid battery]

A lead-acid battery according to the present invention includes a positive electrode plate, a negative electrode plate, and an electrolyte solution. The positive electrode plate includes a positive current collector and a positive electrode material. The negative electrode plate includes a negative electrode material. The positive electrode material contains antimony in a content of less than 0.5% by mass. The negative electrode material contains a polymer compound having a repeating structure of oxy $C_{2-4}$ alkylene units in an amount of less than 500 ppm on a mass basis.
When the negative electrode material contains the polymer compound, a hydrogen overvoltage in the negative electrode plate can be increased, and an amount of overcharge can be reduced. In order to obtain the effect of the polymer compound, the polymer compound needs to be present near lead or lead sulfate. Thus, it is important that the negative electrode material contains the polymer compound regardless of whether or not a component of the lead-acid battery other than the negative electrode material contains the polymer compound.
In general, in a lead-acid battery, the reaction during overcharge is greatly affected by a reductive reaction of hydrogen ions at an interface between lead and an electrolyte solution. Thus, in the lead-acid battery according to the present invention, the reason why the amount of overcharge is reduced is considered to be that a surface of lead which is a negative active material is covered with the polymer compound, so that the hydrogen overvoltage increases, and a side reaction in which hydrogen is generated from protons during overcharge is inhibited.
Next, the positive electrode material contains antimony (Sb) in a content of less than 0.5% by mass. Although it is considered that antimony suppresses softening of the positive electrode material, usually, when antimony is used even in a trace amount, a large disadvantage occurs. Specifically, antimony contained in the positive electrode material is gradually eluted in the electrolyte solution and precipitated on the negative electrode plate. When antimony is precipitated on the negative electrode plate, the hydrogen overvoltage of the negative electrode plate decreases, the amount of overcharge increases, and a liquid decrease is promoted.
On the other hand, it has been found that when the negative electrode material contains the polymer compound in an amount of less than 500 ppm on a mass basis, elution of antimony from the positive electrode material is suppressed, an effect of suppressing softening of the positive electrode material is enhanced, and reduction and fixation of antimony (that is, precipitation of antimony) on the negative electrode plate are suppressed. As a result, the amount of overcharge is drastically reduced, and the amount of overcharge can be reduced as compared with the case where antimony is not used. Thus, a considerable amount of antimony can be added to the positive electrode material, so that softening of the positive electrode material can be highly suppressed. The reduction in the amount of overcharge and the suppression of softening of the positive electrode material act synergistically, so that a cycle life in a charge-discharge cycle in which shallow charge-discharge is repeated can be remarkably increased. It is unexpected that the elution of antimony from the positive electrode material is suppressed by including the polymer compound in the negative electrode material.

The positive current collector may contain antimony. That is, the positive current collector may be formed of a lead alloy (Pb-Sb-based alloy) containing antimony. In this case, antimony is eluted from the positive current collector. At least a part of antimony contained in the positive electrode material may be antimony eluted from the positive current collector and derived from the positive current collector moved to the positive electrode material. The content of antimony in the positive current collector may be, for example, 1% by mass or more and 3% by mass or less.

All of antimony contained in the positive electrode material may be antimony eluted from the positive current collector and moved to the positive electrode material (that is, derived from the positive current collector). In this case, in a step of preparing the positive electrode plate, the positive electrode material may not contain antimony.

The lead-acid battery may be either a valve regulated (sealed) lead-acid battery or a flooded-type (vented type) lead-acid battery.

Hereinafter, the lead-acid battery according to an embodiment of the present invention will be described for each of the main constituent elements, but the present invention is not limited to the following embodiment.

[Lead-acid battery]

(Negative electrode plate)

The negative electrode plate usually includes a negative current collector in addition to a negative electrode material. The negative electrode material is obtained by removing the negative current collector from the negative electrode plate. Note that a member such as a mat or a pasting paper may be stuck to the negative electrode plate. Such a member (sticking member) is used integrally with the negative electrode plate and is thus assumed to be included in the negative electrode plate. Also, when the negative electrode plate includes such a member, the negative electrode material excludes the negative current collector and the sticking member. However, when the sticking member such as a mat is attached to a separator, a thickness of the sticking member is included in a thickness of the separator.

The negative current collector may be formed by casting lead (Pb) or a lead alloy, or may be formed by processing a lead sheet or a lead alloy sheet. Examples of the processing method include expanding processing and punching processing. It is preferable to use a negative electrode grid as the negative current collector because the negative electrode material is easily supported.

The lead alloy used for the negative current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like. The negative current collector may include a surface layer. The surface layer and the inner layer of the negative current collector may have different compositions. The surface layer may be formed in the lug of the negative current collector. The surface layer of the lug may contain Sn or an Sn alloy.

The negative electrode material contains the above polymer compound. The negative electrode material further contains a negative active material (lead or lead sulfate) that exhibits a capacity through a redox reaction. The negative electrode material may contain an expander, a carbonaceous material, and/or other additives. Examples of the additive include barium sulfate, fibers (resin fibers and the like), and the like, but are not limited thereto. Note that the negative active material in the charged state is spongy lead, but the non-formed negative electrode plate is usually prepared using lead powder.

(Polymer compound)

The polymer compound has oxy $C_{2-4}$ alkylene units. Examples of the oxy $C_{2-4}$ alkylene unit include an oxyethylene unit, an oxypropylene unit, an oxytrimethylene unit, an oxy 2-methyl-1,3-propylene unit, an oxy 1,4-butylene unit, an oxy 1,3-butylene unit, and the like. The polymer compound may have one kind or two or more kinds of such oxy $C_{2-4}$ alkylene units.

The polymer compound contains a repeating structure of oxy $C_{2-4}$ alkylene units. The repeating structure may contain one kind of oxy $C_{2-4}$ alkylene unit, or may contain two or more kinds of oxy $C_{2-4}$ alkylene units. The polymer compound may contain one kind of the repeating structure or two or more kinds of repeating structures.

The polymer compound easily takes a linear structure by having oxy $C_{2-4}$ alkylene units, and thus it is expected that the polymer compound hardly remains in the negative electrode material and easily diffuses into the electrolyte solution. However, the present inventors have actually found that even when a very small amount of a polymer compound is contained in the negative electrode material, the effect of reducing the amount of overcharge can be obtained. From this, it is considered that when the polymer compound is contained in the negative electrode material, the polymer compound can be present near lead, whereby a high adsorption action of the oxy $C_{2-4}$ alkylene unit on lead is exerted. Since the effect of reducing the amount of overcharge is obtained even with a very small amount of the polymer compound, it is further considered that the polymer compound spreads thinly on a lead surface and the reductive reaction of hydrogen ions in a wide region of the lead surface is suppressed. This does not contradict that the polymer compound easily takes a linear structure. Since suppression of hydrogen generation during overcharge can reduce the liquid decrease, it is advantageous for prolonging the life of the lead-acid battery.

In general, in a storage battery, since a sulfuric acid aqueous solution is used as the electrolyte solution, when an organic additive (oil, polymer, organic expander, etc.) is contained in the negative electrode material, it becomes difficult to balance elution into the electrolyte solution and adsorption to lead. For example, when an organic additive having low adsorptivity to lead is used, elution into the electrolyte solution becomes easy, so that the amount of overcharge is hardly reduced. On the other hand, when an organic additive having high adsorptivity to lead is used, it is difficult to thinly adhere the organic additive to the lead surface, and the organic additive tends to be unevenly distributed in the lead pores.

In general, when the lead surface is covered with an organic additive, the reductive reaction of hydrogen ions hardly occurs, and therefore the amount of overcharge tends to decrease. When the lead surface is covered with the organic additive, lead sulfate generated during discharge is hardly eluted during charge, so that charge acceptability is deteriorated. Thus, suppression of deterioration of charge acceptability and reduction in the amount of overcharge are in a trade-off relationship, and it has been conventionally difficult to achieve both simultaneously. In addition, when the organic additive is unevenly distributed in lead pores, it is necessary to increase a content of the organic additive in the negative electrode material in order to ensure a sufficient effect of reducing the amount of overcharge. However, when the content of the organic additive is increased, the charge acceptability is greatly deteriorated.

When the organic additive is unevenly distributed in the lead pores, movement of ions (such as lead ions and sulfate ions) is inhibited by steric hindrance of the unevenly distributed organic additive. Thus, low temperature high rate (HR) performance is also deteriorated. When the content of the organic additive is increased in order to ensure a sufficient effect of reducing the amount of overcharge, movement of ions in the pores is further inhibited, and the low temperature HR discharge performance is also deteriorated.

On the other hand, the polymer compound having an oxy $C_{2-4}$ alkylene unit is contained in the negative electrode material, so that the lead surface is covered with the polymer compound in the thinly spread state as described above. Thus, as compared with the case of using other organic additives, even when the content in the negative electrode material is small, an excellent effect of reducing the amount of overcharge can be secured. Since the polymer compound thinly covers the lead surface, elution of lead sulfate, generated during discharge, during charge is less likely to be inhibited, whereby the deterioration of the charge acceptability can also be suppressed. Thus, it is possible to suppress the deterioration of the charge acceptability while reducing the amount of overcharge. Since the uneven distribution of the polymer compound in the lead pores is suppressed, ions easily move, and the deterioration of the low temperature HR discharge performance can also be suppressed.

The polymer compound contains many oxy C2-4 alkylene units in the molecule. Therefore, it is considered that it becomes easy to adsorb to lead, and it becomes easy to thinly cover the lead surface by easily taking a linear structure. Thus, the amount of overcharge can be more effectively reduced. An effect of suppressing the deterioration of the charge acceptability and/or the low temperature HR discharge performance can be further enhanced.

When a polymer compound containing a repeating structure of oxy $C_{2-4}$ alkylene units is used, it is considered it becomes easier to adsorb to lead, and it becomes easy to thinly cover the lead surface by easily taking a linear structure. Thus, the amount of overcharge can be more effectively reduced. An effect of suppressing the deterioration of the charge acceptability and/or the low temperature HR discharge performance can be further enhanced.

In the present specification, the polymer compound refers to a compound having a repeating unit of oxy $C_{2-4}$ alkylene units and/or having a number average molecular weight (Mn) of 500 or more.

In the present specification, the number average molecular weight Mn is determined by gel permeation chromatography (GPC). A standard substance used for determining Mn is polyethylene glycol.

Note that the oxy $C_{2-4}$ alkylene unit is a unit represented by $-O-R^1-$($R^1$ represents a $C_{2-4}$ alkylene group.).

Examples of the polymer compound include hydroxy compounds having a repeating structure of oxy $C_{2-4}$ alkylene units (poly $C_{2-4}$ alkylene glycols, copolymers containing a repeating structure of oxy $C_{2-4}$ alkylene, $C_{2-4}$ alkylene oxide adducts of a polyol, and the like), etherified or esterified products of these hydroxy compounds, and the like. When such a polymer compound is used, the deterioration of the charge acceptability can be further suppressed. Since the effect of reducing the amount of overcharge is high, generation of hydrogen gas can be more effectively suppressed, and a high liquid decrease suppressing effect can be obtained.

Examples of the copolymer include copolymers containing different oxy $C_{2-4}$ alkylene units, poly $C_{2-4}$ alkylene glycol alkyl ethers, poly $C_{2-4}$ alkylene glycol esters of carboxylic acids, and the like. The copolymer may be a block copolymer.

The polyol may be any of an aliphatic polyol, an alicyclic polyol, an aromatic polyol, a heterocyclic polyol, and the like. From the viewpoint that the polymer compound easily spreads thinly on the lead surface, aliphatic polyols, alicyclic polyols (for example, polyhydroxycyclohexane, polyhydroxynorbornane, and the like), and the like are preferable, and among them, aliphatic polyols are preferable. Examples of the aliphatic polyol include aliphatic diols and polyols of triol or higher (for example, glycerin, trimethylolpropane, pentaerythritol, sugar alcohol, and the like), and the like. Examples of the aliphatic diol include an alkylene glycol having 5 or more carbon atoms. The alkylene glycol may be, for example, a $C_{5-14}$ alkylene glycol or a $C_{5-10}$ alkylene glycol. Examples of the sugar alcohol include erythritol, xylitol, mannitol, sorbitol, and the like. In the alkylene oxide adduct of the polyol, the alkylene oxide corresponds to an oxy $C_{2-4}$ alkylene unit of the polymer compound and contains at least $C_{2-4}$ alkylene oxide. From the viewpoint that the polymer compound easily take a linear structure, the polyol is preferably a diol.

The etherified product has an $-OR^2$ group obtained by etherifying - OH groups (-OH groups composed of a hydrogen atom of a terminal group and an oxygen atom bonded to the hydrogen atom) at at least a part of terminals of the hydroxy compound having the repeating structure of oxy $C_{2-4}$ alkylene units (wherein $R^2$ is an organic group.). Among terminals of the polymer compound, some terminals may be etherified, or all terminals may be etherified. For example, one terminal of a main chain of the linear polymer compound may be an -OH group, and the other terminal may be an $-OR^2$ group.

The esterified product has an $-O-C(=O)-R^3$ group obtained by esterifying -OH groups (-OH groups composed of a hydrogen atom of a terminal group and an oxygen atom bonded to the hydrogen atom) at at least a part of terminals of the hydroxy compound having the repeating structure of oxy $C_{2-4}$ alkylene units (wherein $R^3$ is an organic group.). Among terminals of the polymer compound, some terminals may be esterified, or all terminals may be esterified. For example, one terminal of a main chain of the linear polymer compound may be an -OH group, and the other terminal may be an $-O-C(=O)-R^3$ group.

Examples of each of the organic groups $R^2$ and $R^3$ include a hydrocarbon group. The hydrocarbon group may have a substituent (for example, a hydroxy group, an alkoxy group, and/or a carboxy group, and the like). The hydrocarbon group may be any of aliphatic, alicyclic, and aromatic. An aliphatic hydrocarbon group is preferable, and an alkyl group is particularly preferable, from the viewpoint that the polymer compound easily adheres thinly to the lead surface. Examples of the alkyl group include a $C_{1-14}$ alkyl group, and may be a $C_{1-10}$ alkyl group or a $C_{1-8}$ alkyl group, or may be a $C_{1-6}$ alkyl group or a $C_{2-6}$ alkyl group. Specific examples of the alkyl group include methyl, ethyl, n-propyl, i-propyl, n-butyl, i-butyl, s-butyl, t-butyl, n-pentyl, neopentyl, i-pentyl, s-pentyl, 3-pentyl, t-pentyl, n-hexyl, 2-ethylhexyl, n-octyl, n-decyl, i-decyl, lauryl, myristyl, and the like. The alkyl group may be either linear or branched.

When an etherified product of a hydroxy compound having a repeating structure of oxy $C_{2-4}$ alkylene units and/or an esterified product of a hydroxy compound having a repeating structure of oxy $C_{2-4}$ alkylene units are used among the polymer compounds, it is preferable because the effect of suppressing the deterioration of the charge acceptability can be further enhanced. Even when these polymer compounds are used, a high liquid decrease suppressing effect can be secured.

The negative electrode material may contain one kind or two or more kinds of polymer compounds.

From the viewpoint of further enhancing the effect of reducing the amount of overcharge and enhancing the effect of suppressing the deterioration of the charge acceptability and/or the low temperature HR discharge performance, it is preferable that the repeating structure of oxy $C_{2-4}$ alkylene includes at least a repeating structure of oxypropylene units ($-O-CH(-CH_3)-CH_2-$). Such a polymer compound easily spreads thinly on a lead surface while having high adsorptivity to lead, and is considered to have an excellent balance therebetween. Thus, the amount of overcharge can be more effectively reduced. An effect of suppressing the deterioration of the charge acceptability and/or the low temperature HR discharge performance can be further enhanced.

The polymer compound containing the oxypropylene unit has peaks derived from -CH< and $-CH_2-$ of the oxypropylene unit in a range of 3.2 ppm to 3.8 ppm in a chemical shift of $^1$H-NMR spectrum. Since electron densities around a nucleus of a hydrogen atom in these groups are different, the peak is split. Such a polymer compound has peaks, for example, in a range of 3.2 ppm or more and 3.42 ppm or less and a range of more than 3.42 ppm and 3.8 ppm or less in a chemical shift of 1H-NMR spectrum. The peak in the range of 3.2 ppm or more and 3.42 ppm or less is derived from $-CH_2-$, and the peak in the range of more than 3.42 ppm and 3.8 ppm or less is derived from -CH< and $-CH_2-$.

Examples of such a polymer compound include polypropylene glycol, a copolymer containing a repeating structure of oxypropylene, a propylene oxide adduct of the polyol, etherified or esterified products thereof, and the like. Examples of the copolymer include oxypropylene-oxyalkylene copolymers (provided that the oxyalkylene is a $C_{2-4}$ alkylene other than oxypropylene), polypropylene glycol alkyl ethers, a polypropylene glycol ester of a carboxylic acid, and the like. Examples of the oxypropylene-oxyalkylene copolymer include an oxypropylene-oxyethylene copolymer, an oxypropylene-oxytrimethylene copolymer, and the like. The oxypropylene-oxyalkylene copolymer may be a block copolymer.

In the polymer compound containing a repeating structure of oxypropylene, the proportion of the oxypropylene unit is, for example, 5 mol% or more, and may be 10 mol% or more or 20 mol% or more.

It is preferable that the polymer compound contains a large amount of oxy $C_{2-4}$ alkylene units from the viewpoint of enhancing adsorptivity to lead and easily taking a linear structure. Such a polymer compound includes, for example, an oxygen atom bonded to a terminal group and a - CH2- group and/or a -CH< group bonded to the oxygen atom. In the $^1$H-NMR spectrum of such a polymer compound, the ratio of the integrated value of the peak of 3.2 ppm to 3.8 ppm to the sum of the integrated value of this peak, the integrated value of the peak of the hydrogen atoms of the - $CH_2$- group, and the integrated value of the peak of the hydrogen atom of the -CH< group increases. This ratio is for example 50% or more or may be 80% or more, and from the viewpoint of further enhancing the effect of reducing the amount of overcharge and further enhancing the effect of suppressing the deterioration of the charge acceptability and/or the low temperature HR discharge performance, the above ratio is more preferably 85% or more. For example, when such a polymer compound has an -OH group at a terminal and also has a -$CH_2$- group or a -CH< group bonded to an oxygen atom of the -OH group, in the $^1$H-NMR spectrum, the peaks of the hydrogen atoms of the -$CH_2$- group and the -CH< group have a chemical shift in a range of more than 3.8 ppm and 4.0 ppm or less.

The polymer compound may contain a compound having Mn of 500 or more, a compound having Mn of 600 or more, or a compound having Mn of 1,000 or more. Mn of such a compound is, for example, 20000 or less, and may be 15000 or less or 10000 or less. The Mn of the compound is preferably 5,000 or less and may be 4,000 or less or 3,000 or less, from the viewpoint of easily retaining the compound in the negative electrode material and easily spreading the compound thinner on the lead surface.

The polymer compound preferably contains at least a compound having Mn of 1,000 or more, and more preferably contains a compound having Mn of 2,000 or more. Mn of such a compound may be 1,000 or more (or 2,000 or more) and 20,000 or less, 1,000 or more (or 2,000 or more) and 15,000 or less, or 1,000 or more (or 2,000 or more) and 10,000 or less. The Mn of the compound is preferably 1,000 or more (or 2,000 or more) and 5,000 or less, may be 1,000 or more (or 2,000 or more) and 4,000 or less, or may be 1,000 or more (or 2,000 or more) and 3,000 or less from the viewpoint of being able to enhance the effect of suppressing the precipitation of antimony on the negative electrode plate as much as possible, easily retaining the compound in the negative electrode material, and easily spreading the compound thinner on the lead surface. When a compound having such Mn is used, even when the positive electrode material contains a considerable amount (for example, 0.01% by mass or more, further 0.03% by mass or more) of antimony, elution of antimony from the positive electrode material can be highly suppressed, and a precipitation amount of antimony in the negative electrode plate can be remarkably reduced. This is considered to be because the polymer compound in the negative electrode material is eluted in the electrolyte solution and combined with antimony in the positive electrode plate, so that antimony easily remains in the positive electrode material, and lead or a lead compound in the negative electrode material is efficiently covered with the polymer compound. As described above, it is possible to more easily reduce the amount of overcharge while highly suppressing softening of the positive electrode material. It is considered that as the molecular weight of the polymer compound increases, the polymer compound tends to remain in the negative electrode material, and the effect of suppressing antimony precipitation and reducing the amount of overcharge increases. By reducing the amount of overcharge, the structural change of the negative active material due to collision of the hydrogen gas with the negative active material can also be suppressed. Thus, the effect of suppressing the deterioration of the low temperature HR discharge performance after the high temperature light load test can be enhanced. As the polymer compound, two or more compounds having different Mn may be used. That is, the polymer compound may have a plurality of peaks of Mn in the distribution of the molecular weight.

The content of the polymer compound in the negative electrode material is, for example, more than 8 ppm, preferably 13 ppm or more, and more preferably 15 ppm or more or 16 ppm or more on a mass basis. When the content of the polymer compound is in such a range, hydrogen generation voltage can be more easily increased, and an effect of reducing an amount of overcharge can be further enhanced. From the viewpoint of easily securing higher low temperature HR discharge performance, the content (mass basis) of the polymer compound in the negative electrode material may be 50 ppm or more or 80 ppm or more. The content (mass basis) of the polymer compound in the negative electrode material is less than 500 ppm, and may be 400 ppm or less, or 200 ppm or less. When the content of the polymer compound is 400 ppm or less (further 200 ppm or less), the lead surface is suppressed from being excessively covered with the polymer compound, so that the deterioration of the low temperature HR discharge performance can be effectively suppressed. The content of the polymer compound in the negative electrode material may be, for example, 15 ppm or more and 400 ppm or less, and may be 50 ppm or more and 400 ppm or less, 15 ppm or more and 400 ppm or less, or 50 ppm or more and 200 ppm or less. In particular, when the antimony content in the positive electrode material is 0.01% by mass or more (further 0.03% by mass or more), the content of the polymer compound in the negative electrode material is desirably 15 ppm or more (further 50 ppm or more). When the antimony content in the positive electrode material is 0.1% by mass or less, the content of the polymer compound in the negative electrode material is desirably 200 ppm or less. From the viewpoint of further stabilizing power reception acceptability of the negative electrode plate, the content of the polymer compound in the negative electrode material is desirably, for example, 200 ppm or less. These lower limit values and upper limit values can be combined arbitrarily.

The content (mass basis) of the polymer compound may be more than 8 ppm (for example, 15 ppm or more) and less than 500 ppm, more than 8 ppm (for example, 15 ppm or more) and 400 ppm or less, more than 8 ppm (for example, 15 ppm or more) and 200 ppm or less, 50 ppm or more (or 80 ppm or more) and 400 ppm or less, or 50 ppm or more and 200 ppm or less.

It is sufficient that the polymer compound can be contained in the negative electrode material, and the source of the polymer compound contained in the negative electrode material is not particularly limited. The polymer compound may be contained in any of the components (for example, a negative electrode plate, a positive electrode plate, an electrolyte solution, and/or a separator, and the like) of the lead-acid battery when preparing the lead-acid battery. The polymer compound may be contained in one constituent element, or may be contained in two or more constituent elements (for example, a negative electrode plate, an electrolyte solution, and the like).

The content of the polymer compound in the negative electrode material is determined for a lead-acid battery in a fully charged state.

In the present specification, the fully charged state of a valve regulated lead-acid battery is a state where the lead-acid battery after formation is subjected to constant current constant voltage charge of 2.23 V/cell at a current (A) 0.2 times as large as the numerical value described as the rated capacity in an air tank of $25°C \pm 2°C$, and the charge is completed when the charge current (A) during constant voltage charge becomes 0.005 times as large as the numerical value described in the rated capacity. The fully charged state of the flooded-type lead-acid battery is defined by the definition of JIS D 5301: 2006. More specifically, the following state is defined as a fully charged state: the lead-acid battery is charged in a water bath at $25°C \pm 2°C$ at a current (A) 0.2 times as large as a numerical value described as a rated capacity until a terminal voltage during charge measured every 15 minutes or an electrolyte solution density subjected to temperature correction to 20°C exhibits a constant value at three significant digits continuously three times. Note that the numerical value described as the rated capacity is a numerical value in which the unit is Ah. The unit of the current set based on the numerical value indicated as the rated capacity is A.

The lead-acid battery in the fully charged state refers to a battery obtained by fully charging a formed lead-acid battery. The full charge of the lead-acid battery may be performed immediately after formation so long as being performed after formation or may be performed after the lapse of time from formation (e.g., a lead-acid battery in use (preferably at the initial stage of use) after formation may be fully charged). The battery at the initial stage of use refers to a battery that has not been used for a long time and has hardly deteriorated.

(Expander)

The negative electrode material can contain an expander. As the expander, an organic expander is preferable. As the organic expander, lignins and/or a synthetic organic expander may be used. Examples of the lignins include lignin, lignin derivatives, and the like. Examples of the lignin derivative include lignin sulfonic acid or salts thereof (such as alkali metal salts (sodium salts and the like)), and the like. The organic expanders are generally roughly classified into lignins and synthetic organic expanders. It can also be said that the synthetic organic expander is an organic expander other than lignins. The synthetic organic expander is an organic polymer containing sulfur element, and generally contains a plurality of aromatic rings in the molecule and sulfur element as a sulfur-containing group. Among the sulfur-containing groups, a sulfonic acid group or a sulfonyl group which is in a stable form is preferable. The sulfonic acid group may exist in an acid form, or may exist in a salt form like a Na salt. The negative electrode material may contain one kind or two or more kinds of expanders.

As the organic expander, it is preferable to use a condensate containing at least a unit of an aromatic compound. Examples of such a condensate include a condensate of an aromatic compound with an aldehyde compound (aldehydes (for example, formaldehyde) and/or condensates thereof, and the like). The organic expander may contain a unit of one kind of an aromatic compound or a unit of two or more kinds of aromatic compounds. Note that the unit of an aromatic compound refers to a unit derived from an aromatic compound incorporated in a condensate.

As the organic expander, one synthesized by a known method may be used, or a commercially available product may be used. The condensate containing a unit of an aromatic compound is obtained, for example, by reacting an aromatic compound with an aldehyde compound. For example, by performing this reaction in the presence of a sulfite or using an aromatic compound containing sulfur element (for example, bisphenol S or the like), an organic expander containing sulfur element can be obtained. For example, the sulfur element content in the organic expander can be adjusted by adjusting the amount of sulfite and/or the amount of the aromatic compound containing sulfur element. Also when other raw materials are used, the condensate containing a unit of an aromatic compound can be obtained according to this method.

Examples of the aromatic ring of the aromatic compound include a benzene ring, a naphthalene ring, and the like. When the aromatic compound has a plurality of aromatic rings, the plurality of aromatic rings may be linked by a direct bond, a linking group (for example, an alkylene group (including an alkylidene group), a sulfone group, and the like), or the like. Examples of such a structure include bisarene structures (biphenyl, bisphenylalkane, bisphenylsulfone, and the like). Examples of the aromatic compound include compounds having the aromatic ring and a hydroxy group and/or an amino group. The hydroxy group or the amino group may be directly bonded to the aromatic ring, or may be bonded as an alkyl chain having a hydroxy group or an amino group. Note that the hydroxy group also includes salts of hydroxy group (-OMe). The amino group also includes salts of amino group (salts with anion). Examples of Me include alkali metals (Li, K, Na, and the like), Group 2 metals of the periodic table (Ca, Mg, and the like), and the like.

As the aromatic compound, bisarene compounds (bisphenol compounds, hydroxybiphenyl compounds, bisarene compounds having an amino group (bisarylalkane compounds having an amino group, bisarylsulfone compounds having an amino group, biphenyl compounds having an amino group, and the like), hydroxyarene compounds (hydroxynaphthalene compounds, phenol compounds, and the like), aminoarene compounds (aminonaphthalene compounds, aniline compounds (aminobenzenesulfonic acid, alkylaminobenzenesulfonic acid, and the like), and the like), and the like are preferable. The aromatic compound may further have a substituent. The organic expander may contain one or more or a plurality of residues of these compounds. As the bisphenol compound, bisphenol A, bisphenol S, bisphenol F, and the like are preferable.

The condensate preferably contains a unit of an aromatic compound having at least a sulfur-containing group. In particular, when a condensate containing at least a unit of a bisphenol compound having a sulfur-containing group is used, an effect of suppressing deterioration of low temperature HR discharge performance after high temperature light load test can be enhanced. From the viewpoint of enhancing the effect of suppressing liquid decrease, it is preferable to use a condensate of a naphthalene compound having a sulfur-containing group and having a hydroxy group and/or an amino group with an aldehyde compound.

The sulfur-containing group may be directly bonded to the aromatic ring contained in the compound, and for example, may be bonded to the aromatic ring as an alkyl chain having a sulfur-containing group. The sulfur-containing group is not particularly limited, and examples thereof include a sulfonyl group, a sulfonic acid group or a salt thereof, and the like.

In addition, as the organic expander, for example, at least a condensate containing at least one selected from the group consisting of units of the bisarene compound and units of a monocyclic aromatic compound (hydroxyarene compound and/or aminoarene compound, or the like) may be used. The organic expander may contain at least a condensate containing a unit of a bisarene compound and a unit of a monocyclic aromatic compound (among them, hydroxyarene compound). Examples of such a condensate include a condensate of a bisarene compound and a monocyclic aromatic compound with an aldehyde compound. As the hydroxyarene compound, a phenol sulfonic acid compound (phenol sulfonic acid, a substituted product thereof, or the like) is preferable. As the aminoarene compound, aminobenzenesulfonic acid, alkylaminobenzenesulfonic acid, and the like are preferable. As the monocyclic aromatic compound, a hydroxyarene compound is preferable. Such a condensate is more advantageous in suppressing the deterioration of the low temperature HR discharge performance after the high temperature light load test because the low temperature HR discharge performance is not impaired even when the condensate experiences an environment higher than normal temperature.

The content of the organic expander contained in the negative electrode material is, for example, 0.01% by mass or more and may be 0.05% by mass or more. The content of the organic expander is, for example, 1.0% by mass or less and may be 0.5% by mass or less. These lower limit values and upper limit values can be combined arbitrarily.

The content of the organic expander contained in the negative electrode material may be 0.01 to 1.0% by mass, 0.05 to 1.0% by mass, 0.01 to 0.5% by mass, or 0.05 to 0.5% by mass.

(Carbonaceous material)

As the carbonaceous material contained in the negative electrode material, carbon black, graphite, hard carbon, soft carbon, and the like can be used. Examples of the carbon black include acetylene black, Ketjen black, furnace black, lamp black, and the like. The graphite may be a carbonaceous material including a graphite-type crystal structure and may be either artificial graphite or natural graphite. One kind of carbonaceous material may be used alone, or two or more kinds thereof may be used in combination.

The content of the carbonaceous material in the negative electrode material is, for example, 0.05% by mass or more and may be 0.10% by mass or more. The content of the carbonaceous material is, for example, 5% by mass or less and may be 3% by mass or less. These lower limit values and upper limit values can be combined arbitrarily.

The content of the carbonaceous material in the negative electrode material may be 0.05 to 5% by mass, 0.05 to 3% by mass, 0.10 to 5% by mass, or 0.10 to 3% by mass.

(Barium sulfate)

The content of barium sulfate in the negative electrode material is, for example, 0.05% by mass or more and may be 0.10% by mass or more. The content of barium sulfate in the negative electrode material is 3% by mass or less and may be 2% by mass or less. These lower limit values and upper limit values can be combined arbitrarily.

The content of barium sulfate in the negative electrode material may be 0.05 to 3% by mass, 0.05 to 2% by mass, 0.10 to 3% by mass, or 0.10 to 2% by mass.

(1) Analysis of polymer compound

Prior to analysis, a lead-acid battery after formation is fully charged and then disassembled to obtain a negative electrode plate to be analyzed. The obtained negative electrode plate is washed with water to remove sulfuric acid from the negative electrode plate. The washing with water is performed until it is confirmed that color of a pH test paper does not change by pressing the pH test paper against the surface of the negative electrode plate washed with water. However, the washing with water is performed within two hours. The negative electrode plate washed with water is dried at $60 \pm 5°C$ in a reduced pressure environment for about six hours. After drying, when the sticking member is included in the negative electrode plate, the sticking member is removed from the negative electrode plate by peeling. Next, the negative electrode material is separated from the negative electrode plate to obtain a sample (hereinafter also referred to as sample A.). Sample A is ground as necessary and subjected to analysis.

(1-1) Qualitative analysis of polymer compound

$150.0 \pm 0.1$ mL of chloroform is added to $100.0 \pm 0.1$ g of the pulverized sample A, and the mixture is stirred at $20 \pm 5°C$ for 16 hours to extract a polymer compound. Thereafter, the solid content is removed by filtration. For a chloroform solution in which the polymer compound obtained by the extraction is dissolved or a polymer compound obtained by drying the chloroform solution, information is obtained from an infrared spectroscopic spectrum, an ultraviolet-visible absorption spectrum, an NMR spectrum, LC-MS and/or pyrolysis GC-MS, and the like to specify the polymer compound.

Chloroform is distilled off under reduced pressure from the chloroform solution in which the polymer compound obtained by the extraction is dissolved to recover a chloroform soluble component. The chloroform soluble component is dissolved in deuterated chloroform, and a 1H-NMR spectrum is measured under the following conditions. From this 1H-NMR spectrum, a peak with a chemical shift in the range of 3.2 ppm or more and 3.8 ppm or less is confirmed. Also, from the peak in this range, the type of the oxy $C_{2-4}$ alkylene unit is specified.

Apparatus: type AL400 nuclear magnetic resonance spectrometer, manufactured by JEOL Ltd.
Observation frequency: 395.88 MHz
Pulse width: 6.30 $\mu$s
Pulse repeating time: 74.1411 seconds
Number of integrations: 32
Measurement temperature: room temperature (20 to 35°C)
Reference: 7.24 ppm
Sample tube diameter: 5 mm

From the $^1$H-NMR spectrum, an integrated value ($V_1$) of the peak at which the chemical shift is present in the range of 3.2 ppm or more and 3.8 ppm or less is determined. In addition, for each of the hydrogen atoms of the -CH2- group and the -CH< group bonded to the oxygen atom bonded to the terminal group of the polymer compound, the sum ($V2$) of integrated values of peaks in the 1H-NMR spectrum is determined. Then, from $V_1$ and $V_2$, a ratio of $V_1$ to the sum of $V_1$ and $V_2$ (= $V_1/(V_1 + V_2) \times 100$ (%)) is determined.

When the integrated value of the peak in the $^1$H-NMR spectrum is determined in the qualitative analysis, two points having no significant signal are determined so as to sandwich the corresponding peak in the $^1$H-NMR spectrum, and each integrated value is calculated using a straight line connecting the two points as a baseline. For example, for the peak in which the chemical shift is present in a range of 3.2 ppm to 3.8 ppm, a straight line connecting two points of 3.2 ppm and 3.8 ppm in the spectrum is used as a baseline. For example, for a peak in which the chemical shift is present in a range of more than 3.8 ppm and 4.0 ppm or less, a straight line connecting two points of 3.8 ppm and 4.0 ppm in the spectrum is used as a baseline.

(1-2) Quantitative analysis of polymer compound

An appropriate amount of the chloroform soluble component is dissolved in deuterated chloroform together with tetrachloroethane (TCE) of $m_r$ (g) measured with an accuracy of $\pm$ 0.0001 g, and a $^1$H-NMR spectrum is measured. An integrated value ($S_a$) of the peak in which the chemical shift is present in the range of 3.2 to 3.8 ppm and an integrated value ($S_r$) of a peak derived from TCE are determined, and mass-based content $C_n$ (ppm) of the polymer compound in the negative electrode material is determined from the following formula.

$$C_n = S_a/S_r \times N_r/N_a \times M_a/M_r \times m_r/m \times 1,000,000$$

wherein $M_a$ is a molecular weight of a structure showing a peak in a chemical shift range of 3.2 to 3.8 ppm (more specifically, a molecular weight of the repeating structure of oxy $C_{2-4}$ alkylene units), and $N_a$ is the number of hydrogen atoms bonded to a carbon atom of a main chain of the repeating structure. $N_r$ and $M_r$ are the number of hydrogen contained in a molecule of reference substance and the molecular weight of the reference substance, respectively, and m (g) is the mass of the negative electrode material used for extraction.)

Since the reference substance in this analysis is TCE, $N_r$ = 2 and $M_r$ = 168. In addition, m = 100.

For example, when the polymer compound is polypropylene glycol, $M_a$ is 58, and $N_a$ is 3. When the polymer compound is polyethylene glycol, Ma is 44, and Na is 4. In the case of a copolymer, $N_a$ is a value obtained by averaging $N_a$ values of each monomer unit using a molar ratio (mol%) of each monomer unit contained in the repeating structure, and $M_a$ is determined according to the type of each monomer unit.

In the quantitative analysis, the integrated value of the peak in the $^1$H-NMR spectrum is determined using data processing software "ALICE" manufactured by JEOL Ltd.

(1-3) Mn Measurement of polymer compound

GPC Measurement of the polymer compound is performed using the following apparatus under the following conditions. Separately, a calibration curve (standard curve) is prepared from a plot of Mn of the standard substance and elution time. The Mn of the polymer compound is calculated based on the standard curve and the GPC measurement result of the polymer compound.

Analysis system: 20A system (manufactured by Shimadzu Corporation)
Column: two columns of GPC KF-805L (manufactured by Shodex) connected in series
Column temperature: 30 °C
Mobile phase: tetrahydrofuran
Flow rate: 1 mL/min.
Concentration: 0.20% by mass
Injection amount: 10 μL
Standard substance: polyethylene glycol (Mn = 2,000,000, 200,000, 20,000, 2,000, 200)
Detector: differential refractive index detector (Shodex RI-201H, manufactured by Shodex)

(Others)

The negative electrode plate can be formed in such a manner that a negative current collector is coated or filled with a negative electrode paste, which is then cured and dried to prepare a non-formed negative electrode plate, and thereafter, the non-formed negative electrode plate is formed. The negative electrode paste is prepared by adding water and sulfuric acid to a lead powder, an organic expander, and if necessary, various additives and mixing the mixture. At the time of curing, it is preferable to cure the non-formed negative electrode plate at a higher temperature than room temperature and high humidity.

The formation can be performed by charging the element in a state where the element including the non-formed negative electrode plate immersed in the electrolyte solution containing sulfuric acid in the container of the lead-acid battery. However, the formation may be performed before the lead-acid battery or the element is assembled. The formation produces spongy lead.

(Positive electrode plate)

The positive electrode plate of a lead-acid battery can be classified into a paste type, a clad type, and the like. The positive electrode plate of the lead-acid battery includes the positive current collector and the positive electrode material, and the positive electrode material contains a positive active material (lead dioxide or lead sulfate) that exhibits a capacity through a redox reaction. The positive electrode material contains at least antimony (Sb) as an additive in a content of less than 0.5% by mass, and may contain other additives as necessary.

Although antimony can remarkably improve the cycle life since it suppresses softening of the positive electrode material, when antimony precipitates on the negative electrode plate from the positive electrode material via the electrolyte solution, the hydrogen overvoltage of the negative electrode plate is reduced, and therefore, the amount of overcharge increases. On the other hand, when the polymer compound in the negative electrode material is combined with antimony at the positive electrode plate via the electrolyte solution, elution of antimony from the positive electrode material is remarkably suppressed. As a result, not only the effect of suppressing softening of the positive electrode material is enhanced, but also precipitation of antimony on the negative electrode plate is suppressed, and the demerit of antimony is greatly alleviated. In addition, the polymer compound in the negative electrode material also has an action of suppressing reduction and securing of antimony. Thus, since it is possible to obtain the effect of reducing the amount of overcharge while obtaining the effect of suppressing softening of the positive electrode material due to antimony, the cycle life is remarkably improved.

When the antimony content in the positive electrode material is 0.5% by mass or more, while the effect of Sb is saturated, it is difficult to suppress elution of antimony from the positive electrode material, and sufficient formation does not tend to proceed in the formation of the positive electrode plate. Thus, sulfation tends to proceed and it becomes difficult to improve the cycle life. When the antimony content in the positive electrode material is large, softening of the positive electrode material is suppressed even if a part of antimony is eluted. However, the amount of antimony eluted in the electrolyte solution and moved to the negative electrode plate increases. On the other hand, when the amount of the polymer compound contained in the negative electrode material increases, reduction and securing of antimony on the negative electrode plate can be suppressed.

The antimony content in the positive electrode material is less than 0.5% by mass, and from the viewpoint of highly suppressing elution of antimony into the electrolyte solution, the antimony content is desirably 0.4% by mass or less and more preferably 0.1% by mas or less. In order to enhance the effect of suppressing softening of the positive electrode material, the antimony content in the positive electrode material is desirably 0.01% by mass or more, and from the viewpoint of remarkably increasing the cycle life, the antimony content is more desirably 0.03% by mass or more. These lower limit values and upper limit values can be combined arbitrarily.

The antimony content may be 0.01% by mass or more and less than 0.5% by mass, 0.01% by mass or more and 0.4% by mass or less, 0.01% by mass or more and 0.1% by mass or less, 0.03% by mass or more and less than 0.5% by mass, 0.03% by mass or more and 0.4% by mass or less, or 0.03% by mass or more and 0.1% by mass or less.

A quantitative analysis method of antimony is shown below.

First, the positive electrode plate is taken out from the lead-acid battery in the fully charged state, and sulfuric acid is removed by washing with water. The washing with water is performed until it is confirmed that color of a pH test paper does not change by pressing the pH test paper against the surface of the positive electrode plate washed with water. However, the washing with water is performed within two hours. The positive electrode plate washed with water is dried by blowing air at $60 \pm 5°C$. After drying, when the sticking member is included in the positive electrode plate, the sticking member is removed from the positive electrode plate by peeling. Next, a sample of an appropriate amount of the positive electrode material (or positive current collector) in the dried state is collected from the positive electrode plate, and the mass of the sample is measured. Next, the entire amount of the sample is dissolved in a mixed aqueous solution containing tartaric acid, nitric acid, and hydrogen peroxide. The obtained solution is diluted with ion-exchanged water as necessary to define a volume, and thereafter, emission intensity of Sb in the solution is measured by inductively coupled plasma (ICP) emission spectroscopy. The mass of Sb contained in the solution is obtained using a calibration curve prepared in advance. A ratio (percentage) of the mass of Sb to the mass of the sample of the positive electrode material (or positive current collector) subjected to analysis is determined as a content of Sb.

The paste-type positive electrode plate includes a grid-like positive current collector and a positive electrode material. The positive electrode material is held by the positive current collector. In the paste-type positive electrode plate, the positive electrode material is obtained by removing the positive current collector from the positive electrode plate.

The positive current collector may be formed by casting lead (Pb) or a lead alloy, or may be formed by processing a lead sheet or a lead alloy sheet. Examples of the processing method include expanding processing and punching processing. It is preferable to use a grid-like current collector as the positive current collector because the positive electrode material is easily supported. As a lead alloy used for the positive current collector, a Pb-Sb alloy, a Pb-Ca alloy, or a Pb-Ca-Sn alloy are preferred in terms of corrosion resistance and mechanical strength. The Pb-Sb-based alloy is suitable when the positive current collector is formed by casting a lead alloy. The positive current collector may include a surface layer. The surface layer and the inner layer of the positive current collector may have different compositions. The surface layer may be formed in a part of the positive current collector. The surface layer may be formed only on the grid portion, only on the lug portion, or only on the frame rib portion of the positive current collector.

A member such as a mat or a pasting paper may be stuck to the positive electrode plate. Such a member (sticking member) is used integrally with the positive electrode plate and is thus assumed to be included in the positive electrode plate. When the positive electrode plate includes such a member, the positive electrode material is obtained by removing the positive current collector and the sticking member from the positive electrode plate.

The clad-type positive electrode plate includes a plurality of porous tubes, a spine inserted into each tube, a current collector coupling the plurality of spines, a positive electrode material with which a spine inserted tube is filled, and a joint that couples the plurality of tubes. In the clad-type positive electrode plate, the positive electrode material is a material obtained by removing the tube, the spine, the current collector, and the joint. In the clad-type positive electrode plate, the spine and the current collector may be collectively referred to as a positive current collector. The lead alloy used for the positive current collector (spine and current collector) is preferably a Pb-Sb-based alloy.

When a Pb-Sb-based alloy is used, that is, when the positive current collector contains antimony, antimony is eluted from the positive current collector. Since the positive current collector is substantially entirely covered with the positive electrode material, antimony is captured by the positive electrode material. Antimony captured by the positive electrode material also has the effect of suppressing softening of the positive electrode material. In this case, at least a part of antimony contained in the positive electrode material is antimony eluted from the positive current collector and derived from the positive current collector.

The antimony content in the positive current collector (that is, the antimony content in the Pb-Sb-based alloy) may be, for example, 1% by mass or more and 3% by mass or less, or 1.5% by mass or more and 2.5% by mass or less.

The Pb-Sb-based alloy may contain arsenic (As) from the viewpoint of further increasing the mechanical strength. The antimony content in the Pb-Sb-based alloy may be 0.1% by mass or more and 0.5% by mass or less, or 0.2% by mass or more and 0.3% by mass or less.

A non-formed paste-type positive electrode plate is obtained by filling a positive current collector with a positive electrode paste, and curing and drying the paste. The positive electrode paste is prepared by kneading lead powder, an additive, water, and sulfuric acid. A non-formed clad-type positive electrode plate is formed by filling a porous tube, into which a spine connected by a current collector is inserted with lead powder or a slurry-like lead powder, and joining a plurality of tubes with a joint. Thereafter, the positive electrode plate is obtained by forming the non-formed positive electrode plates.

The formation can be performed by charging the element in a state where the element including the non-formed positive electrode plate immersed in the electrolyte solution containing sulfuric acid in the container of the lead-acid battery. However, the formation may be performed before the lead-acid battery or the element is assembled.

(Separator)

The separator may have a sheet shape or may be formed in a bag shape. One sheet-like separator may be disposed between the positive electrode plate and the negative electrode plate. Further, the electrode plate may be disposed so as to be sandwiched by one sheet-like separator in a folded state. In this case, the positive electrode plate sandwiched by the folded sheet-like separator and the negative electrode plate sandwiched by the folded sheet-like separator may be overlapped, or one of the positive electrode plate and the negative electrode plate may be sandwiched by the folded sheet-like separator and overlapped with the other electrode plate. Also, the sheet-like separator may be folded into a bellows shape, and the positive electrode plate and the negative electrode plate may be sandwiched by the bellows-shaped separator such that the separator is interposed therebetween. When the separator folded in a bellows shape is used, the separator may be disposed such that the folded portion is along the horizontal direction of the lead-acid battery (e.g., such that the bent portion may be parallel to the horizontal direction), and the separator may be disposed such that the folded portion is along the vertical direction (e.g., such that the bent portion is parallel to the vertical direction). In the separator folded in the bellows shape, recesses are alternately formed on both main surface sides of the separator. Since the lugs are usually formed on the upper portion of the positive electrode plate and the negative electrode plate, when the separator is disposed such that the folded portions are along the horizontal direction of the lead-acid battery, the positive electrode plate and the negative electrode plate are each disposed only in the recess on one main surface side of the separator (i.e., a double separator is interposed between the adjacent positive and negative plates). When the separator is disposed such that the folded portion is along the vertical direction of the lead-acid battery, the positive electrode plate can be housed in the recess on one main surface side, and the negative electrode plate can be housed in the recess on the other main surface side (i.e., the separator can be interposed singly between the adjacent positive and negative plates). When the bag-shaped separator is used, the bag-shaped separator may house the positive electrode plate or may house the negative electrode plate. In the present specification, the up-down direction of the plate means the up-down direction of the lead-acid battery in the vertical direction.

(Electrolyte solution)

The electrolyte solution is an aqueous solution containing sulfuric acid and may be gelled as necessary.

The polymer compound may be contained in the electrolyte solution.

The concentration of the polymer compound in the electrolyte solution may be, for example, 500 ppm or less, 300 ppm or less, or 200 ppm or less on a mass basis. As described above, even when the amount of the polymer compound contained in the electrolyte solution is small, the amount of overcharge can be reduced, and the deterioration of the charge acceptability and the low temperature HR discharge performance can be suppressed. The concentration of the polymer compound in the electrolyte solution may be 1 ppm or more or 5 ppm or more on a mass basis. These upper limit values and lower limit values can be combined arbitrarily.

The concentration of the polymer compound in the electrolyte solution may be 1 ppm or more and 500 ppm or less, 1 ppm or more and 300 ppm or less, 1 ppm or more and 200 ppm or less, 5 ppm or more and 500 ppm or less, 5 ppm or more and 300 ppm or less, or 5 ppm or more and 200 ppm or less on a mass basis.

The concentration of the polymer compound in the electrolyte solution may be, for example, 100 ppm or more, may be 200 ppm or more or 500 ppm or more, may be more than 500 ppm, or may be 600 ppm or more on a mass basis. The polymer compound preferably contains at least a compound having Mn of 1,000 or more and 5,000 or less (for example, 4,000 or less or 3,000 or less). Since the polymer compound having Mn of 5,000 or less is easily dissolved in the electrolyte solution and easily moves in the electrolyte solution, the polymer compound moves into the negative electrode material and can further enhance the effect of reducing the amount of overcharge. In the polymer compound having Mn of 1,000 or more, it is considered that the adsorbability to lead is further enhanced, and the effect of reducing the amount of overcharge can be further enhanced. When the polymer compound is contained in the negative electrode material and the electrolyte solution contains some concentration of polymer compound, elution of the polymer compound from the negative electrode plate can be suppressed, and the polymer compound can be replenished from the electrolyte solution to the negative electrode plate.

The concentration of the polymer compound in the electrolyte solution may be, for example, 5,000 ppm or less, 4,000 ppm or less, 3,000 ppm or less, 2,500 ppm or less, or 2,400 ppm or less on a mass basis.

The concentration of the polymer compound in the electrolyte solution may be, on a mass basis, 100 ppm or more (or 200 ppm or more) and 5,000 ppm or less, 100 ppm or more (or 200 ppm or more) and 4,000 ppm or less, 100 ppm or more (or 200 ppm or more) and 3,000 ppm or less, 100 ppm or more (or 200 ppm or more) and 2,500 ppm or less, 100 ppm or more (or 200 ppm or more) and 2400 ppm or less, 500 ppm or more (or more than 500 ppm) and 5,000 ppm or less, 500 ppm or more (or more than 500 ppm) and 4,000 ppm or less, 500 ppm or more (or more than 500 ppm) and 3,000 ppm or less, 500 ppm or more (or more than 500 ppm) and 2,500 ppm or less, 500 ppm or more (or more than 500 ppm) and 2,400 ppm or less, 600 ppm or more and 5,000 ppm or less (or 4,000 ppm or less), 600 ppm or more and 3,000 ppm or less (or 2,500 ppm or less), or 600 ppm or more and 2,400 ppm or less.

Regarding the concentration of the polymer compound in the electrolyte solution, chloroform is added to and mixed with a predetermined amount ($m_1$ (g)) of the electrolyte solution taken out from the formed lead-acid battery in a fully charged state, the mixture is allowed to stand to be separated into two layers, and then only the chloroform layer is taken out. After repeating this operation several times, chloroform is distilled off under reduced pressure to obtain a chloroform soluble content. An appropriate amount of the chloroform soluble component is dissolved in deuterated chloroform together with $0.0212 \pm 0.0001$ g of TCE, and a 1H-NMR spectrum is measured. An integrated value (Sa) of the peak in which the chemical shift is present in the range of 3.2 to 3.8 ppm and an integrated value (Sr) of a peak derived from TCE are determined, and content Ce of the polymer compound in the electrolyte solution is determined from the following formula.

Ce = Sa/Sr × Nr/Na × Ma/Mr × mr/m1 × 1,000,000 wherein $M_a$ and $N_a$ are the same as described above.

The electrolyte solution may contain cations (e.g., metal cations such as sodium ion, lithium ion, magnesium ion, and/or aluminum ion) and/or anions (e.g., anions other than sulfate anions such as phosphate ions) as necessary.

The specific gravity of the electrolyte solution in the lead-acid battery in the fully charged state at 20°C is, for example, 1.20 or more and may be 1.25 or more. The specific gravity of the electrolyte solution at 20°C is 1.35 or less and preferably 1.32 or less. These lower limit values and upper limit values can be combined arbitrarily. The specific gravity of the electrolyte solution at 20°C may be 1.20 or more and 1.35 or less, 1.20 or more and 1.32 or less, 1.25 or more and 1.35 or less, or 1.25 or more and 1.32 or less.

The lead-acid battery can be obtained by a production method including a step of assembling a lead-acid battery by housing a positive electrode plate, a negative electrode plate, and an electrolyte solution in a container. In the assembly process of the lead-acid battery, the separator is usually disposed so as to be interposed between the positive electrode plate and the negative electrode plate. The assembly process of the lead-acid battery may include a step of forming the positive electrode plate and/or the negative electrode plate as necessary after the step of housing the positive electrode plate, the negative electrode plate, and the electrolyte solution in the container. The positive electrode plate, the negative electrode plate, the electrolyte solution, and the separator are each prepared before being housed in the container.

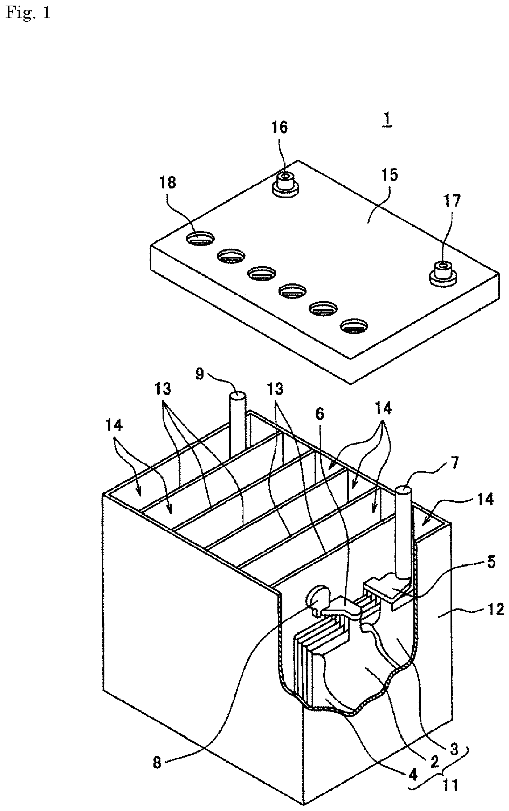

Fig. 1 shows an appearance of an example of a lead-acid battery according to an embodiment of the present invention.

A lead-acid battery 1 includes a container 12 that houses an element 11 and an electrolyte solution (not shown). The inside of the container 12 is partitioned by partitions 13 into a plurality of cell chambers 14. Each cell chamber 14 contains one element 11. An opening of the container 12 is closed with a lid 15 having a negative electrode terminal 16 and a positive electrode terminal 17. The lid 15 is provided with a vent plug 18 for each cell chamber. At the time of water addition, the vent plug 18 is removed to supply a water addition liquid. The vent plug 18 may have a function of discharging gas generated in the cell chamber 14 to the outside of the battery.

The element 11 is configured by laminating a plurality of negative electrode plates 2 and positive electrode plates 3 with a separator 4 interposed therebetween. Here, the bag-shaped separator 4 housing the negative electrode plate 2 is shown, but the form of the separator is not particularly limited. In the cell chamber 14 located at one end of the container 12, a negative electrode shelf portion 6 for connecting the plurality of negative electrode plates 2 in parallel is connected to a penetrating connection body 8, and a positive electrode shelf portion 5 for connecting the plurality of positive electrode plates 3 in parallel is connected to a positive pole 7. The positive pole 7 is connected to the positive electrode terminal 17 outside the lid 15. In the cell chamber 14 located at the other end of the container 12, a negative pole 9 is connected to the negative electrode shelf portion 6, and the penetrating connection body 8 is connected to the positive electrode shelf portion 5. The negative pole 9 is connected to the negative electrode terminal 16 outside the lid 15. Each of the penetrating connection bodies 8 passes through a through-hole provided in the partition 13 to connect the elements 11 of the adjacent cell chambers 14 in series.

The positive electrode shelf portion 5 is formed by welding the lugs, provided on the upper portions of the respective positive electrode plates 3, to each other by a cast-on-strap method or a burning method. The negative electrode shelf portion 6 is also formed by welding the lugs, provided on the upper portions of the respective negative electrode plates 2, to each other in accordance with the case of the positive electrode shelf portion 5.

The lid 15 of the lead-acid battery has a single structure (single lid), but is not limited to the illustrated examples. The lid 15 may have, for example, a double structure including an inner lid and an outer lid (or an upper lid). The lid having the double structure may have a reflux structure between the inner lid and the outer lid for returning the electrolyte solution into the battery (inside the inner lid) through a reflux port provided in the inner lid.

A lead-acid battery according to the present invention includes a positive electrode plate, a negative electrode plate, and an electrolyte solution,

in which the positive electrode plate includes a positive current collector and a positive electrode material,
the positive electrode material contains antimony in a content of less than 0.5% by mass,
the negative electrode plate includes a negative electrode material,
the negative electrode material contains a polymer compound having a repeating structure of oxy $C_{2-4}$ alkylene units, and
a content of the polymer compound in the negative electrode material is less than 500 ppm on a mass basis.

The content of antimony in the positive electrode material may be 0.01% by mass or more.

The content of antimony in the positive electrode material may be 0.03% by mass or more and 0.1% by mass or less.

The positive current collector may contain antimony.

The content of antimony in the positive current collector may be 1% by mass or more and 3% by mass or less.

The content of the polymer compound in the negative electrode material may exceed 8 ppm, 13 ppm or more, 15 ppm or more, 16 ppm or more, 50 ppm or more, or 80 ppm or more on a mass basis.

The content of the polymer compound in the negative electrode material may be 15 ppm or more and 400 ppm or less.

The content of the polymer compound in the negative electrode material may be 200 ppm or more and 400 ppm or less.

The polymer compound may contain at least one selected from the group consisting of an etherified product of a hydroxy compound having a repeating structure of the oxy $C_{2-4}$ alkylene units and an esterified product of a hydroxy compound having the repeating structure of the oxy $C_{2-4}$ alkylene units, and the hydroxy compound may be at least one selected from the group consisting of a poly $C_{2-4}$ alkylene glycol, a copolymer having a repeating structure of oxy $C_{2-4}$ alkylene, and a $C_{2-4}$ alkylene oxide adduct of a polyol.

The repeating structure of the oxy $C_{2-4}$ alkylene units may contain at least a repeating structure of oxypropylene units.

The polymer compound may contain at least a compound having a number average molecular weight of 1,000 or more.

The polymer compound may contain at least a compound having a number average molecular weight of 2,000 or more.

The polymer compound may contain at least a compound having a number average molecular weight (Mn) of 500 or more (or 1,000 or more, preferably 2,000 or more).

The Mn of the compound may be 5,000 or less, 4,000 or less, or 3,000 or less.

Hereinafter, the present invention will be specifically described on the basis of examples and comparative examples, but the present invention is not limited to the following examples.

<<Lead-acid batteries R1 to R17 and A1 to A16>>

(1) Preparation of lead-acid battery

(a) Preparation of negative electrode plate

Lead powder as raw material, barium sulfate, carbon black, a polymer compound (polypropylene glycol (PPG), Mn = 2,000), and an organic expander (sodium lignin sulfonate) are mixed with an appropriate amount of a sulfuric acid aqueous solution to obtain a negative electrode paste. At this time, the components are mixed so that the content of the polymer compound in the negative electrode material, which is determined by the procedure described above, is the value shown in Table 1, the content of barium sulfate is 0.6% by mass, the content of carbon black is 0.3% by mass, and the content of the organic expander is 0.07% by mass. A mesh portion of an expanded grid made of a Pb-Ca-Sn alloy is filled with the negative electrode paste, which is then cured and dried to obtain a non-formed negative electrode plate.

(b) Preparation of positive electrode plate

A lead powder as a raw material and an antimony compound (antimony trioxide) are mixed with an appropriate amount of a sulfuric acid aqueous solution to obtain a positive electrode paste. At this time, the respective components are mixed so that the content of antimony in the positive electrode material, which is determined by the procedure described above, is the value shown in Table 1 to obtain the positive electrode paste. A mesh portion of an expanded grid made of a Pb-Ca-Sn alloy is filled with the positive electrode paste, which is then cured and dried to obtain a non-formed positive electrode plate.

(c) Preparation of test battery

A test battery has a rated voltage of 2 V and a rated 5-hour rate capacity of 32 Ah. An element of the test battery includes seven positive electrode plates and seven negative electrode plates. The negative electrode plate is housed in a bag-shaped separator and stacked with the positive electrode plate to form the element. The element is housed in a polypropylene container together with an electrolyte solution (sulfuric acid aqueous solution), and subjected to formation in the container to prepare a flooded-type lead-acid battery. The specific gravity of the electrolyte solution after formation is 1.28 (in terms of 20°C).

In the $^1$H-NMR spectrum of the polymer compound measured by the procedure described above, a peak derived from -CH< of the oxypropylene unit is observed in a chemical shift range of 3.2 ppm or more and 3.42 ppm or less, and a peak derived from -CH$_2$- of the oxypropylene unit is observed in a chemical shift range of more than 3.42 ppm and 3.8 ppm or less. In addition, in the $^1$H-NMR spectrum, a ratio of an integrated value of the peak of 3.2 ppm to 3.8 ppm to the sum of the integrated value of this peak, an integrated value of a peak of hydrogen atoms of the -CH$_2$- group bonded to the oxygen atom, and an integrated value of a peak of a hydrogen atom of the -CH< group bonded to the oxygen atom is 98.1%.

(2) Evaluation

(a) Amount of overcharge

Using the lead-acid battery, evaluation is performed under the following conditions.

In order to set a more overcharge condition than the normal 4-10 min test specified in JIS D 5301, a test of 1 minute of discharge and 10 minutes of charge (1-10 min test) is performed at 75°C $\pm$ 3°C (high temperature light load test). 1220 cycles of charge and discharge are repeated in the high temperature light load test. The amount of overcharge (amount of charge-discharge capacity) in each cycle up to 1220 cycles is summed and averaged to obtain the amount of overcharge (Ah) per cycle. The amount of overcharge is evaluated by a ratio (%) when the amount of overcharge (Ah) per cycle of the lead-acid battery R1 is 100. It can be said that as the numerical value is smaller, the amount of overcharge is smaller and the liquid decrease is smaller. The results of the lead-acid batteries R1 to R17 and A1 to A16 are shown in Table 1.

Discharge: 25 A, 1 minute
Charge: 2.47 V/cell, 25 A, 10 minutes
Water tank temperature: 75°C $\pm$ 3°C

(b) Cycle life (Sallow cycle)

Using the lead-acid battery, evaluation is performed under the following conditions.

In a water tank at 30°C $\pm$ 2°C, discharge for 12 minutes at a constant current of 32 A and charge for 12.6 minutes at a constant current of 32 A are alternately repeated, and when the terminal voltage at a discharge terminal stage reaches 1.60 V/cell or less, it is determined that the end of life has been reached, and the number of cycles at that time is determined.

Table 1 shows a relative value when the result of the battery R1 is 100. It can be said that the larger the numerical value, the better the cycle life. The results of the lead-acid batteries R1 to R17 and A1 to A16 are shown in Table 1.

(c) Antimony precipitation amount

Using a storage battery after the cycle life test, analysis is performed under the following conditions.

The lead-acid battery is disassembled, the negative electrode plate is taken out, sulfuric acid is removed within 30 minutes by washing with water, and the negative electrode plate is dried at 60 $\pm$ 5°C under a reduced pressure environment. Next, a sample of an appropriate amount of the negative electrode material in the dried state is collected from the negative electrode plate, and the mass of the sample is measured. Next, an entire amount of the sample is dissolved in a nitric acid aqueous solution. The solution obtained by the dissolution of the entire amount is diluted with ion-exchanged water as necessary to define a volume, and thereafter, emission intensity of Sb in the solution is measured by ICP emission spectroscopy. The mass of Sb contained in the solution is obtained using a calibration curve prepared in advance. The ratio of the negative electrode material subjected to an analysis to the mass of the sample is determined as a precipitation amount of Sb.

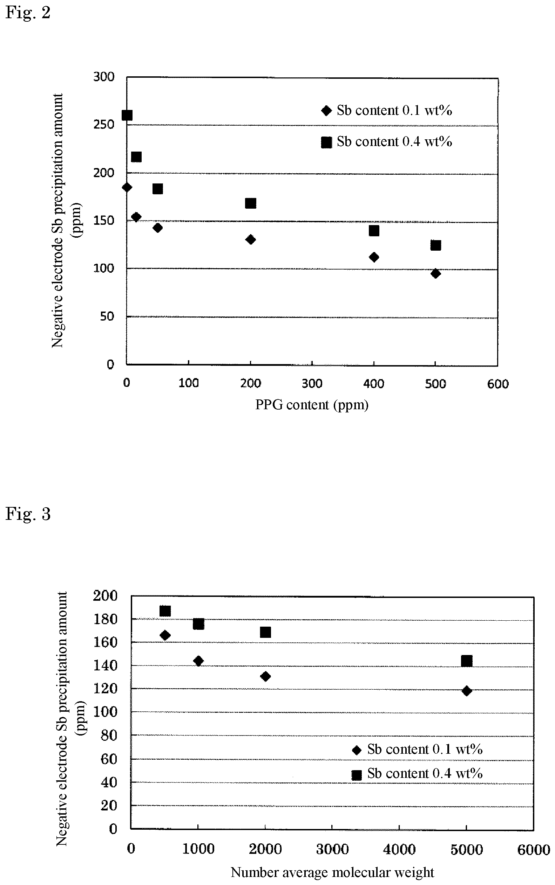

The results of batteries R4, A9 to A12, and R16 having an antimony content of 0.1% by mass in the positive electrode material and the results of batteries R7, A13 to A16, and R17 having an antimony content of 0.4% by mass in the positive electrode material are shown in Table 2 and a graph in Fig. 2.

[Table 1]

| Battery | Sb content (wt%) | PPG content (ppm) | Amount of overcharge | Cycle life |
|---------|------------------|-------------------|----------------------|------------|
| R1 | 0 | 0 | 100 | 100 |
| R2 | 0.01 | | 105 | 123 |
| R3 | 0.03 | | 109 | 128 |
| R4 | 0.1 | | 115 | 140 |
| R5 | 0.2 | | 121 | 139 |
| R6 | 0.3 | | 127 | 135 |
| R7 | 0.4 | | 130 | 131 |
| R8 | 0.5 | | 134 | 87 |
| R9 | 0 | 15 | 84 | 99 |
| R10 | | 50 | 75 | 98 |
| R11 | | 200 | 63 | 95 |
| R12 | | 400 | 48 | 93 |
| R13 | | 500 | 45 | 91 |
| A1 | 0.01 | 15 | 85 | 126 |
| A2 | | 50 | 77 | 135 |
| A3 | | 200 | 65 | 138 |
| A4 | | 400 | 52 | 132 |
| R14 | | 500 | 46 | 84 |

(continued)

| Battery | Sb content (wt%) | PPG content (ppm) | Amount of overcharge | Cycle life |
|---------|------------------|-------------------|----------------------|------------|
| A5 | 0.03 | 15 | 87 | 134 |
| A6 | | 50 | 78 | 142 |
| A7 | | 200 | 68 | 146 |
| A8 | | 400 | 54 | 138 |
| R15 | | 500 | 47 | 89 |
| A9 | 0.1 | 15 | 90 | 151 |
| A10 | | 50 | 82 | 157 |
| A11 | | 200 | 70 | 161 |
| A12 | | 400 | 57 | 154 |
| R16 | | 500 | 51 | 97 |
| A13 | 0.4 | 15 | 95 | 148 |
| A14 | | 50 | 88 | 154 |
| A15 | | 200 | 76 | 157 |
| A16 | | 400 | 64 | 150 |
| R17 | | 500 | 57 | 109 |

As shown in Table 1, when an Sb content is 0.01 to 0.4% by mass, the cycle life is good. However, when a PPG content is zero, the amount of overcharge (that is, liquid decrease) is large. On the other hand, when the negative electrode material contains PPG, the amount of overcharge is remarkably suppressed. The larger the PPG content is, the more remarkable the suppression of the amount of overcharge is. When the Sb content in the positive electrode material reaches 0.5% by mass, it is difficult to improve the cycle life. Even when the PPG content reaches 500 ppm, it is difficult to improve the cycle life. This is considered to be because the charge acceptability of the negative electrode plate is lowered, sulfation tends to proceed, and the life is reached by negative electrode regulation.

[Table 2]

| Battery | Sb content (wt%) | PPG content (ppm) | Sb precipitation amount (ppm) |
|---------|------------------|-------------------|-------------------------------|
| R4 | 0.1 | 0 | 185 |
| A9 | | 15 | 154 |
| A10 | | 50 | 143 |
| A11 | | 200 | 131 |
| A12 | | 400 | 113 |
| R16 | | 500 | 96 |
| R7 | 0.4 | 0 | 260 |
| A13 | | 15 | 217 |
| A14 | | 50 | 184 |
| A15 | | 200 | 169 |
| A16 | | 400 | 141 |
| R17 | | 500 | 126 |

Table 2 and Fig. 2 show that PPG adsorbed to the negative electrode material suppresses elution of Sb from the positive electrode plate into the electrolyte solution and prevents precipitation of antimony reaching the negative electrode plate at the negative electrode. It is found that, even under an environment where the Sb content in the positive electrode material is high (for example, the Sb content is 0.4% by mass) and Sb is likely to be eluted, by controlling the PPG content in the negative electrode material, Sb precipitation can be suppressed to the same extent as in a case where the Sb content is 0.1% by mass.

<<Lead-acid batteries A17 to A24>>

In the preparation of the negative electrode plate, a polymer compound having Mn shown in Table 3 is used. A negative electrode paste is obtained so that the content of the polymer compound in the negative electrode material is 200 ppm. In the preparation of the positive electrode plate, a positive electrode paste is obtained so that the content of antimony in the positive electrode material is the value shown in Table 3 (0.1% by mass or 0.4% by mass). Except for these, a test battery is prepared similarly to the lead-acid batteries R4 and R7 and the like, and the antimony precipitation amount, the amount of overcharge, and the cycle life are evaluated. The results of the lead-acid batteries A17 to A24 are shown in Table 3, and the results of the antimony precipitation amount are shown in a graph in Fig. 3. For the polymer compound, in the $^1$H-NMR spectrum, the ratio of the integrated value of the peak of 3.2 ppm to 3.8 ppm to the sum of the integrated value of this peak, the integrated value of the peak of hydrogen atoms of the -$CH_2$- group bonded to the oxygen atom, and the integrated value of the peak of the hydrogen atom of the -CH< group bonded to the oxygen atom is 90.8% to 98.7%.

[Table 3]

| Battery | Sb content (wt%) | Mn of PPG | Sb precipitation amount (ppm) | Amount of overcharge | Cycle life |
|---------|------------------|-----------|-------------------------------|----------------------|------------|
| A17 | | 500 | 166 | 86 | 147 |
| A18 | | 1000 | 144 | 79 | 156 |
| A19 | 0.1 | 2000 | 131 | 70 | 161 |
| A20 | | 5000 | 119 | 66 | 164 |
| A21 | | 500 | 187 | 94 | 141 |
| A22 | | 1000 | 176 | 90 | 146 |
| A23 | 0.4 | 2000 | 169 | 87 | 157 |
| A24 | | 5000 | 145 | 80 | 163 |

From Table 2 and Fig. 3, it can be understood that an effect of suppressing Sb precipitation becomes remarkable when Mn of the polymer compound is 1,000 or more, and the effect becomes more remarkable when Mn is 2,000 or more. It is considered that the polymer compound contained in the negative electrode material has the action of suppressing reduction and securing of antimony on the negative electrode plate when antimony is eluted in the electrolyte solution. It is considered that when the molecular weight of the polymer compound is large, an attractive force acting between molecules and between the molecules and a surface of the negative electrode material increases, so that the polymer compound easily remains in the negative electrode material, and the effect of suppressing Sb precipitation increases.

<<Lead-acid batteries A25 to A27, R18, and A19>>

A negative electrode paste is obtained similarly to A1 and the like except that in the preparation of the negative electrode plate, the content of the polymer compound (Mn = 2,000) in the negative electrode material is changed as shown in Table 4.

A negative electrode paste is obtained similarly to A1 and the like except that in the preparation of the positive electrode plate, the content of antimony in the positive electrode material is changed to be the value shown in Table 4 (0.2% by mass or 0.5% by mass).

The positive electrode paste is filled in a mesh portion of a cast grid made of a Pb-Sb-As alloy (Sb content: 1.7% by mass, As content: 0.25% by mass), and cured and dried to obtain an unformed positive electrode plate.

Except for these, a test battery is prepared similarly to the lead-acid battery A1 and the like, and the amount of overcharge and the cycle life are evaluated. The results are shown in Table 4 together with comparison data. The numerical values in Table 4 are relative values when the result of Comparative Example 1 is 100 as in Table 1.

[Table 4]

| Battery | Current collector Sb content (wt%) | Electrode material Sb content (wt%) | PPG content (ppm) | Amount of overcharge | Cycle life |
|---|---|---|---|---|---|
| R1 | | 0 | 0 | 100 | 100 |
| A13 | 0 | 0.4 | 15 | 95 | 148 |
| A15 | | | 200 | 76 | 157 |
| A16 | | | 400 | 64 | 150 |
| A25 | 1.7 | 0.2 | 15 | 76 | 144 |
| A26 | | | 200 | 65 | 165 |
| A27 | | | 400 | 51 | 160 |
| R18 | | | 500 | 47 | 112 |
| R19 | | 0.5 | 400 | 90 | 80 |

Table 4 shows that when the positive current collector contains Sb and the Sb content of the positive electrode material is 0.2% by mass, good results equal to or more than those of Examples 13 to 16 and the like in which the Sb content of the positive electrode material is 0.4% by mass can be obtained. However, when the PPG content reaches 500 ppm, it is difficult to improve the cycle life. This is considered to be because the charge acceptability of the negative electrode plate is lowered, sulfation tends to proceed, and the life is reached by negative electrode regulation. When the Sb content in the positive electrode material reaches 0.5% by mass, it is difficult to improve the cycle life.

INDUSTRIAL APPLICABILITY

The lead-acid battery according to the present invention can be suitably used as, for example, a power source for starting a vehicle (automobiles, motorcycles, etc.) and a power source for an industrial energy storage apparatus or the like such as an electric vehicle (forklift, etc.). Note that these applications are merely illustrative and not limited to these applications.

DESCRIPTION OF REFERENCE SIGNS

1: lead-acid battery
2: negative electrode plate
3: positive electrode plate
4: separator
5: positive electrode shelf portion
6: negative electrode shelf portion
7: positive pole
8: penetrating connection body
9: negative pole
11: element
12: container
13: partition
14: cell chamber
15: lid
16: negative electrode terminal
17: positive electrode terminal
18: vent plug

**Claims**

1. A lead-acid battery comprising a positive electrode plate, a negative electrode plate, and an electrolyte solution,

   wherein the positive electrode plate comprises a positive current collector and a positive electrode material,
   the positive electrode material contains antimony in a content of less than 0.5% by mass,
   the negative electrode plate comprises a negative electrode material,
   the negative electrode material contains a polymer compound having a repeating structure of oxy $C_{2-4}$ alkylene units, and
   a content of the polymer compound in the negative electrode material is less than 500 ppm on a mass basis.

2. The lead-acid battery according to claim 1, wherein the content of antimony in the positive electrode material is 0.01% by mass or more.

3. The lead-acid battery according to claim 2, wherein the content of antimony in the positive electrode material is 0.03% by mass or more and 0.1% by mass or less.

4. The lead-acid battery according to any one of claims 1 to 3, wherein the positive current collector contains antimony.

5. The lead-acid battery according to claim 4, wherein the content of antimony in the positive current collector is 1% by mass or more and 3% by mass or less.

6. The lead-acid battery according to any one of claims 1 to 5, wherein the content of the polymer compound in the negative electrode material is more than 8 ppm on a mass basis.

7. The lead-acid battery according to claim 6, wherein the content of the polymer compound in the negative electrode material is 15 ppm or more and 400 ppm or less.

8. The lead-acid battery according to claim 7, wherein the content of the polymer compound in the negative electrode material is 50 ppm or more and 200 ppm or less.

9. The lead-acid battery according to claims 1 to 8, wherein the polymer compound contains at least one selected from the group consisting of an etherified product of a hydroxy compound having a repeating structure of the oxy $C_{2-4}$ alkylene units and an esterified product of a hydroxy compound having the repeating structure of the oxy $C_{2-4}$ alkylene units, and
   the hydroxy compound is at least one selected from the group consisting of a poly $C_{2-4}$ alkylene glycol, a copolymer having a repeating structure of oxy $C_{2-4}$ alkylene, and a $C_{2-4}$ alkylene oxide adduct of a polyol.

10. The lead-acid battery according to claims 1 or 9, wherein the repeating structure of the oxy $C_{2-4}$ alkylene units contains at least a repeating structure of oxypropylene units.

11. The lead-acid battery according to any one of claims 1 to 10, wherein the polymer compound contains at least a compound having a number average molecular weight of 1,000 or more, wherein
   the number average molecular weight is measured by the method described in the description.

12. The lead-acid battery according to claim 11, wherein the polymer compound contains at least a compound having a number average molecular weight of 2,000 or more.


**Patentansprüche**

1. Bleiakkumulator, umfassend eine Positivelektrodenplatte, eine Negativelektrodenplatte und eine Elektrolytlösung,

   wobei die Positivelektrodenplatte einen positiven Stromkollektor und ein Positivelektrodenmaterial umfasst, das Positivelektrodenmaterial Antimon in einem Anteil von weniger als 0,5 Masse-% enthält,
   die Negativelektrodenplatte ein Negativelektrodenmaterial umfasst,
   das Negativelektrodenmaterial eine Polymerverbindung mit einer sich wiederholenden Struktur von Oxy($C_{2-4}$-alkylen)-Einheiten enthält, und

ein Anteil der Polymerverbindung in dem Negativelektrodenmaterial weniger als 500 ppm auf Massebasis beträgt.

**2.** Bleiakkumulator nach Anspruch 1, wobei der Anteil von Antimon in dem Positivelektrodenmaterial 0,01 Masse-% oder mehr beträgt.

**3.** Bleiakkumulator nach Anspruch 2, wobei der Anteil von Antimon in dem Positivelektrodenmaterial 0,03 Masse-% oder mehr und 0,1 Masse-% oder weniger beträgt.

**4.** Bleiakkumulator nach einem der Ansprüche 1 bis 3, wobei der positive Stromkollektor Antimon enthält.

**5.** Bleiakkumulator nach Anspruch 4, wobei der Anteil von Antimon in dem positiven Stromkollektor 1 Masse-% oder mehr und 3 Masse-% oder weniger beträgt.

**6.** Bleiakkumulator nach einem der Ansprüche 1 bis 5, wobei der Anteil der Polymerverbindung in dem Negativelektrodenmaterial mehr als 8 ppm auf Massebasis beträgt.

**7.** Bleiakkumulator nach Anspruch 6, wobei der Anteil der Polymerverbindung in dem Negativelektrodenmaterial 15 ppm oder mehr und 400 ppm oder weniger beträgt.

**8.** Bleiakkumulator nach Anspruch 7, wobei der Anteil der Polymerverbindung in dem Negativelektrodenmaterial 50 ppm oder mehr und 200 ppm oder weniger beträgt.

**9.** Bleiakkumulator nach den Ansprüchen 1 bis 8, wobei die Polymerverbindung mindestens eines, ausgewählt aus der Gruppe bestehend aus einem veretherten Produkt einer Hydroxyverbindung mit einer sich wiederholenden Struktur der Oxy($C_{2-4}$-Alkylen)-Einheiten und einem veresterten Produkt einer Hydroxyverbindung mit der sich wiederholenden Struktur der Oxy($C_{2-4}$-alkylen)-Einheiten, enthält, und
die Hydroxyverbindung mindestens eines, ausgewählt aus der Gruppe bestehend aus einem Poly($C_{2-4}$-alkylen)glykol, einem Copolymer mit einer sich wiederholenden Struktur von Oxy($C_{2-4}$-alkylen), und einem $C_{2-4}$-Alkylenoxid-Addukt eines Polyols, ist.

**10.** Bleiakkumulator nach den Ansprüchen 1 oder 9, wobei die sich wiederholende Struktur der Oxy($C_{2-4}$-alkylen)-Einheiten mindestens eine sich wiederholende Struktur von Oxypropylen-Einheiten umfasst.

**11.** Bleiakkumulator nach einem der Ansprüche 1 bis 10, wobei die Polymerverbindung mindestens eine Verbindung mit einem Zahlenmittel des Molekulargewichts von 1000 oder mehr umfasst, wobei
das Zahlenmittel des Molekulargewichts mit dem in der Beschreibung beschriebenen Verfahren gemessen wird.

**12.** Bleiakkumulator nach Anspruch 11, wobei die Polymerverbindung mindestens eine Verbindung mit einem Zahlenmittel des Molekulargewichts von 2000 oder mehr umfasst.


**Revendications**

**1.** Batterie au plomb comprenant une plaque d'électrode positive, une plaque d'électrode négative et une solution d'électrolyte,

dans laquelle la plaque d'électrode positive comprend un collecteur de courant positif et un matériau d'électrode positive,
le matériau d'électrode positive contient de l'antimoine en une teneur de moins de 0,5 % en masse,
la plaque d'électrode négative comprend un matériau d'électrode négative,
le matériau d'électrode négative contient un composé polymère ayant une structure répétée de motifs oxy alkylène en $C_2$ à $C_4$ et
une teneur du composé polymère dans le matériau d'électrode négative est de moins de 500 ppm sur une base en masse.

**2.** Batterie au plomb selon la revendication 1, dans laquelle la teneur d'antimoine dans le matériau d'électrode positive est de 0,01 % en masse ou plus.

3. Batterie au plomb selon la revendication 2, dans laquelle la teneur d'antimoine dans le matériau d'électrode positive est de 0,03 % en masse ou plus et de 0,1 % en masse ou moins.

4. Batterie au plomb selon l'une quelconque des revendications 1 à 3, dans laquelle le collecteur de courant positif contient de l'antimoine.

5. Batterie au plomb e selon la revendication 4, dans laquelle la teneur d'antimoine dans le collecteur de courant positif est de 1 % en masse ou plus et de 3 % en masse ou moins.

6. Batterie au plomb selon l'une quelconque des revendications 1 à 5, dans laquelle la teneur du composé polymère dans le matériau d'électrode négative est de plus de 8 ppm sur une base en masse.

7. Batterie au plomb selon la revendication 6, dans laquelle la teneur du composé polymère dans le matériau d'électrode négative est de 15 ppm ou plus et de 400 ppm ou moins.

8. Batterie au plomb selon la revendication 7, dans laquelle la teneur du composé polymère dans le matériau d'électrode positive est de 50 ppm ou plus et de 200 ppm ou moins.

9. Batterie au plomb selon les revendications 1 à 8, dans laquelle le composé polymère contient au moins un choisi dans le groupe constitué par un produit éthérifié d'un composé hydroxy ayant une structure répétée des motifs oxy alkylène en $C_2$ à $C_4$ et un produit estérifié d'un composé hydroxy ayant la structure répétée des motifs oxy alkylène en $C_2$ à $C_4$ et
le composé hydroxy est au moins un choisi dans le groupe constitué par un poly alkylène en $C_2$ à $C_4$ glycol, un copolymère ayant une structure répétée d'oxy alkylène en $C_2$ à $C_4$ et un adduit d'oxyde d'alkylène en $C_2$ à $C_4$ d'un polyol.

10. Batterie au plomb selon les revendications 1 à 9, dans laquelle la structure répétée des motifs oxy alkylène en $C_2$ à $C_4$ contient au moins une structure répétée de motifs oxypropylène.

11. Batterie au plomb selon l'une quelconque des revendications 1 à 10, dans laquelle le composé polymère contient au moins un composé ayant un poids moléculaire moyen en nombre de 1 000 ou plus,
le poids moléculaire moyen en nombre étant mesuré par le procédé décrit dans la description.

12. Batterie au plomb selon la revendication 11, dans laquelle le composé polymère contient au moins un composé ayant un poids moléculaire moyen en nombre de 2 000 ou plus.

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108630937 A
- CN 101937996 A
- JP S60182662 A
- US 20170309897 A
- US 20160248080 A1
- US 20040053130 A1

- JP S5147237 A
- JP 60182662 A
- JP 2000149980 A
- JP 2017525092 W
- JP 2016054091 A